# EUROPÄISCHE PATENTANMELDUNG

(11) **EP 1 582 288 A1**
(43) Veröffentlichungstag der Anmeldung: **05.10.2005**
(21) Anmeldenummer: 05102552.6
(22) Anmeldetag: 31.03.2005
(51) Int. Cl.: B23K 35/30, B22D 17/20

(54) **Verfahren und Schweissdracht zur Aufbereitung abgenutzter Druckgussfüllkammern**

(30) Priorität: 02.04.2004 DE 102004016236
(71) Anmelder: Weier, Ludger, 57368 Lennestadt (DE)
(72) Erfinder: Weier, Ludger, 57368 Lennestadt (DE)
(74) Vertreter: von Kreisler Selting Werner

(57) **Zusammenfassung**

Verfahren zur Aufbereitung abgenutzter Druckgussfüllkammern durch Auftragen einer Schweißnaht aus einem Schweißdraht, dadurch gekennzeichnet, dass als Schweißdraht ein Fülldraht eingesetzt wird, dessen Schweißprobe neben Eisen
- 0,2 bis 0,5 Gew.-% Kohlenstoff,
- 0,09 bis 2,0 Gew.-% Silizium,
- 2,0 bis 5,55 Gew.-% Chrom,
- 0,01 bis 2,00 Gew.-% Aluminium und
- 0,4 bis 1,20 Gew-% Vanadium

## Beschreibung

Die Erfindung betrifft ein Verfahren zur Aufbereitung abgenutzter Druckgussfüllkammern und einen daran angepassten Schweißdraht.

Zum Zuführen eines geschmolzenen Gussmaterials in eine Gussform sind beim Druckgießen Füllkammern vorgesehen. Diese sind der Druckgussform vorgeschaltet und dienen zum Zuführen des Gussmaterials unter Druck. Alternativ kann das Gussmaterial z.B. beim VACURAL-Verfahren auch durch Unterdruck transportiert werden. Derartige Füllkammern weisen eine im wesentlichen zylindrische Form mit einer zylindrischen Innenkammer auf. Über eine beispielsweise seitlich, d.h. in der Mantelfläche der zylindrischen Füllkammer angeordnete Einlassöffnung wird das Gussmaterial der Füllkammer zugeführt.

Innerhalb der Füllkammer ist ein Kolben angeordnet, durch den das Gussmaterial in die Gussform gedrückt wird. Hierzu wird der Kolben in Längsrichtung der Füllkammer bewegt.

Insbesondere aufgrund der hohen Temperaturen des Gussmaterials treten innerhalb der Füllkammer, die üblicherweise aus Warmarbeitsstahl besteht, starke Abnutzungen bzw. Auswaschungen auf. Dies führt zu Undichtigkeiten zwischen dem Kolben und der Füllkammer. Aufgrund der Undichtigkeiten kann gegebenenfalls durch den Kolben kein ausreichender Druck mehr erzeugt werden. Dies hat zur Folge, dass die Füllkammer ausgetauscht werden muss.

Die EP 1 256 402 beschreibt ein Verfahren und eine Vorrichtung zur Aufbereitung solcher abgenutzter Druckgussfüllkammern. Hierbei erfolgt zunächst eine Abtragung der Bearbeitung, so dass ein zylindrischer Innenraum mit konstantem Durchmesser erzeugt und anschließend schraubenlinienförmig durch Auftragschweißen neues Material aufgezogen wird. Hier ist beschrieben, dass zum Schweißen Fülldrahtelektroden eingesetzt werden, beispielsweise der EnDoTec D016. Dabei handelt es sich um einen Draht der Firma Castolin-Eutectic enthaltend neben Eisen ca. 0,3 Gew.-% Kohlenstoff, 0,5 Gew.-% Silizium, 0,5 Gew.-% Mangan, 2,5 Gew.-% Chrom, 4 Gew.-% Wolfram und 0,6 Gew.-% Vanadium.

Erfindungsgemäß wurde gefunden, dass durch eine veränderte Schweißdrahtzusammensetzung längere Standzeiten bzw. höhere Schusszahlen erzielt werden können.

Beansprucht wird daher ein Verfahren zur Aufbereitung abgenutzter Druckgussfüllkammern durch Auftragen einer Schweißnaht aus einem Schweißdraht, dadurch gekennzeichnet, dass als Schweißdraht ein Fülldraht eingesetzt wird, dessen Schweißprobe neben Eisen
- 0,2 bis 0,5 Gew.-% Kohlenstoff,
- 0,09 bis 2,0 Gew.-% Silizium,
- 2,0 bis 5,55 Gew.-% Chrom,
- 0,01 bis 2,00 Gew.-% Aluminium und
- 0,4 bis 1,20 Gew-% Vanadium
enthält.

Gegenstand der Erfindung ist weiterhin ein Fülldraht für Schweißarbeiten dadurch gekennzeichnet, dass eine Schweißprobe neben Eisen
- 0,2 bis 0,5 Gew.-% Kohlenstoff,
- 0,09 bis 2,0 Gew.-% Silizium,
- 2,0 bis 5,55 Gew.-% Chrom,
- 0,01 bis 2,00 Gew.-% Aluminium und
- 0,4 bis 1,20 Gew-% Vanadium
enthält.

Bevorzugte Werte für die Zusammensetzung der Schweißprobe betragen für die einzelnen Elemente
- Kohlenstoff: 0,25 bis 0,43 Gew.-%;
- Silizium: 0,4 bis 1,2 Gew.-%, mehr bevorzugt 0,45 bis 1,0 Gew.-%;
- Chrom: 2,0 bis 5,5 Gew.-%, mehr bevorzugt 2,2 bis 4,0 Gew.-%;
- Aluminium: 0,035 bis 1,3 Gew.-%, mehr bevorzugt 0,07 bis 1 Gew.-%;
- Vanadium: 0,5 bis 1,1 Gew.-%, merh bevorzugt 0,5 bis 0,85 Gew.-%.

Die Schweißprobe erfolgt gemäß dem Werkabnahmeprüfzeugnis 3.1b nach DIN EN 10204. Dabei erfolgt das Abschweißen auf einer Grundplatte aus Stahl (St 52, Werkstoff Nr. 1.0570). Es werden drei Schweißlagen aufgetragen mit einer Zwischenlagentemperatur von < 100°C.

Aus der so erhaltenen Schweißprobe kann dann die Elementzusammensetzung analysiert werden. Es handelt sich dabei um eine übliche Qualitätsprüfung von Fülldrähten.

Der im erfindungsgemäßen Verfahren eingesetzte Fülldraht kann neben den genannten Elementen weitere Elemente enthalten.

In einer Ausführungsform enthält die Schweißprobe zusätzlich 0,2 bis 2,0 Gew.-%, bevorzugt 0,35 bis 0,5 Gew.-% Mangan.

Alternativ oder zusätzlich kann sie auch 0,08 bis 0,4 Gew.-%, bevorzugt 0,2 bis 0,31 Gew.-% Nickel enthalten.

Ein weiterer möglicher Inhaltsstoff ist Wolfram in Mengen von 3,5 bis 4,5 Gew.-%, bevorzugt 4,0 bis 4,5 Gew.-%.

Typischerweise liegen die Werte für weitere Elemente wie Phosphor, Schwefel, Molybdän, Niob und Bor jeweils ≤ 0,005 Gew.-%, die Werte für Stickstoff ≤ 0,025 Gew.-%, für Cobalt < 0,015 Gew.-% und für Kupfer ≤ 0,045 Gew.-%.

Die Schweißprobe weist typischerweise eine Härte von 45 bis 47 HRC auf (Härteprüfung nach Rockwell mit einem kegelförmigen Prüfkörper für harte Werkstoffe).

Die Erfindung wird durch die folgenden Beispiele weiter erläutert.

### Beispiel 1

Ein Fülldraht, dessen Schweißprobe folgende Zusammensetzung aufwies:

| | |
|---|---|
| Kohlenstoff | 0,372 Gew.-% |
| Silizium | 0,418 Gew.-% |
| Mangan | 0,394 Gew.-% |
| Chrom | 2,47 Gew.-% |
| Nickel | 0,224 Gew.-% |
| Aluminium | 0,07 Gew.-% |
| Wolfram | 4,45 Gew.-% |

wurde in einem Verfahren gemäß EP 1 256 402 eingesetzt.

Gegenüber einer Füllkammer, bei der die Aufarbeitung unter Einsatz von EnDoTec D016 erfolgt, erreicht der erfindungsgemäße Fülldraht nach jetzigen Ergebnissen eine zumindest doppelt so hohe Standzeit. Sie liegt damit auch deutlich über der einer Neukammer.

## Patentansprüche

1. Verfahren zur Aufbereitung abgenutzter Druckgussfüllkammern durch Auftragen einer Schweißnaht aus einem Schweißdraht, **dadurch gekennzeichnet, dass** als Schweißdraht ein Fülldraht eingesetzt wird, dessen Schweißprobe neben Eisen
- 0,2 bis 0,5 Gew.-% Kohlenstoff,
- 0,09 bis 2,0 Gew.-% Silizium,
- 2,0 bis 5,55 Gew.-% Chrom,
- 0,01 bis 2,00 Gew.-% Aluminium und
- 0,4 bis 1,20 Gew-% Vanadium
enthält.

2. Fülldraht für Schweißarbeiten, **dadurch gekennzeichnet, dass** eine Schweißprobe neben Eisen
- 0,2 bis 0,5 Gew.-% Kohlenstoff,
- 0,09 bis 2,0 Gew.-% Silizium,
- 2,0 bis 5,55 Gew.-% Chrom,
- 0,01 bis 2,00 Gew.-% Aluminium und
- 0,4 bis 1,20 Gew-% Vanadium
enthält.

3. Fülldraht nach Anspruch 2, **dadurch gekennzeichnet, dass** die Schweißprobe zusätzlich 0,2 bis 2,0 Gew.-% Mangan enthält.

4. Fülldraht nach Anspruch 2, **dadurch gekennzeichnet, dass** die Schweißprobe zusätzlich 0,08 bis 0,400 Gew.-% Nickel enthält.

5. Fülldraht nach Anspruch 2, **dadurch gekennzeichnet, dass** die Schweißprobe zusätzlich 3,5 bis 4,50 Gew.-% Wolfram enthält.

6. Fülldraht nach einem der Ansprüche 2 bis 5, **dadurch gekennzeichnet, dass** die Schweißprobe eine Härte von 45 bis 47 HRC aufweist.

7. Fülldraht nach einem der Ansprüche 2 bis 6, **dadurch gekennzeichnet, dass** die Schweißprobe 0,3 bis 1 Gew.-% Aluminium enthält.

8. Verwendung eines Schweißdrahtes gemäß einem der Ansprüche 2 bis 7 in einem Verfahren zur Aufbereitung abgenutzter Druckgussfüllkammern.
